# EUROPEAN PATENT APPLICATION

(11) **EP 2 819 028 A2**
(43) Date of publication of application: **31.12.2014**
(21) Application number: 13184068.8
(22) Date of filing: 12.09.2013
(51) Int. Cl.: G06F 17/30

(54) **Content management system**

(30) Priority: 20.06.2013 IN MU20972013
(71) Applicant: Tata Consultancy Services Limited, 400021 Mumbay (IN)
(72) Inventor: Suresh, Sandeep Krishna, 400076 Mumbai (IN); Dani, Jayant Sudhakarrao, 400076 Mumbai (IN)
(74) Representative: Zacco Sweden AB

(57) **Abstract**

A method comprising receiving a data insertion request, where the data insertion request includes a data reference, indicating data to be stored, and a data repository (108) indicator indicating a data repository (108), from amongst a plurality of data repositories in which the data is to be stored, and wherein at least one data repository from the plurality of data repositories is a big data system. Further, a resource type, from amongst one or more resource types, corresponding to the data repository (108), is identified based on the data insertion request. Further, a configuration element, from amongst one or more configuration elements, corresponding to the data repository (108) is determined based on the resource type. Further, an application programming interface (API) associated with the configuration element is triggered for establishing a connection with the data repository (108) for storing the data.

## Description

### TECHNICAL FIELD

The present subject matter relates, in general, to content management and, in particular, to storing data in a content management system.

### BACKGROUND

In today's world, several organizations, such as companies, banks, insurance companies, and educational institutions, deploy content management systems for storing and management of data. For instance, an organization may deploy a web content management system to create, manage, store, and deploy data on web pages. Similarly, an enterprise content management system may enable an enterprise to organize data in the form of documents, contacts and business records. A content management system typically stores the data in a data repository associated, directly or indirectly, with the content management system.

### BRIEF DESCRIPTION OF THE DRAWINGS

The detailed description is described with reference to the accompanying figure(s). In the figure(s), the left-most digit(s) of a reference number identifies the figure in which the reference number first appears. The same numbers are used throughout the figure(s) to reference like features and components. Some embodiments of systems and/or methods in accordance with embodiments of the present subject matter are now described, by way of example only, and with reference to the accompanying figure(s), in which:

Figure 1 illustrates a network environment implementing a content management system, according to an embodiment of the present subject matter.

Figure 2 illustrates a method for storing content in a content management system, according to an embodiment of the present subject matter.

### DETAILED DESCRIPTION

Several organizations, such as corporate companies, banks, insurance companies, and educational institutions, deploy content management systems, such as web content management (WCM) system, digital asset management (DAM) system, document management system (DMS), independent risk management (IRM) system, and enterprise content management (ECM) system for convenient management of data.

A content management system typically enables an organization to store data in a data repository associated with the content management system. For instance, the content management system may enable storage of the data in a file system or a relational database management system (RDBMS) associated either directly or indirectly with the content management system. With the advancement in technology, a substantial increase in the volume of data which is required to be stored and maintained by the organizations has been observed. For instance, with the development of the Internet, creation and communication of data in the form of blogs, e-mail, and social networking sites has increased substantially. Further, digitization of user records all across the world has also contributed to increase in the data which is required to be maintained by the organizations. However, such large volumes of data, commonly referred to as big data, may prove to be difficult to maintain in the conventional file system and the RDBMS system. Further, storing of such large volumes of data in the conventional file system and the RDBMS system may lead to overloading of system resources and may result in slow processing of the big data. Moreover, the conventional file system may be designed to store data of a particular type only, thereby limiting its scalability across content management systems.

In one conventional technique, a data repository, for example, a big data system enables storage of the big data associated with organizations. However, management of the big data may prove to be a difficult task as the conventional content management systems, for example a java based content management system may not be able to establish a connection for accessing the big data stored in the big data system. In the absence of the connection, processing of the big data may not be feasible, thereby limiting the implementation of the big data system with the content management system. Moreover, multiple content management systems may need to be deployed for storing and managing data in different data repositories, thereby leading to increased operational and implementation cost.

In accordance with the present subject matter, a method and a system for storing data in a content management system are described. The content management system allows users and organizations to store data in one or more data repositories, for example, a file system, a RDBMS, and a big data system, associated with the content management system. For the purpose, the content management system may include a plug-in for establishing a connection with the aforementioned data repositories. In one implementation, a data insertion request including a data reference indicating data to be stored and a data repository indicator is received by the content management system for storing the data. In one implementation, the data repository indicator indicates a data repository, from amongst a plurality of data repositories, in which the data is to be stored. For instance, the data repository indicator may indicate a file system in which the data is to be stored. In another example, the data repository indicator may indicate an RDBMS for storing the data. In a case where big data, i.e., large volume of data is to be stored, in a single instance or over a period of time, the data repository indicator may indicate a big data system, i.e., a data repository capable of storing the big data.

Further, a resource type from amongst one or more resource types is ascertained. In one implementation, the one or more resource types are included in a properties file with each of the one or more resource type corresponding to a respective data repository from the plurality of data repositories. Upon receiving the data insertion request, the resource type corresponding to the data repository indicated by the data repository indicator is ascertained by the content management system.

Upon ascertaining the resource type, a configuration element, from amongst one or more configuration elements, corresponding to the resource type is determined. Each of the configuration elements also corresponds to a data repository. For example, the configuration element <data store> indicates the data repository big data system, the configuration element <file system> indicates the data repository file system, and the configuration element <persistence manager> indicates the data repository RDBMS.

Subsequently, an application programming interface (API) associated with the configuration element is triggered for establishing a connection with the data repository. Upon establishment of the connection, a path indicating a location in the data repository may be ascertained and subsequently the data may be stored in the data repository based on the path. In one implementation, where a user may seek to retrieve the data, the content management system may retrieve the data from the path where the data has been stored.

Thus, the present system and methods allow for establishment of connection between the content management system and the data repository such as the big data system. Further, the present subject matter discloses a content management system capable of establishing a connection with any of the aforementioned data repositories, thereby by averting the need for deploying separate content management systems for different data repositories. Establishment of the connection enables storage of large volumes of data, i.e., the big data in the big data system. Further, due to establishment of the connection, better management operations, such as storing, creating, searching, and cleansing of the data is feasible, thereby leading to better management of the data. Moreover, the content management system in accordance with the present subject matter is scalable as it allows support for connection with existing data repositories such as the file system and the RDBMS. Further, the content management system also provides support for facilitating connection with new data repositories, thereby adding to the scalability and compatibility of the content management system. Furthermore, the content management system may be deployed by service providers, such as ecommerce websites, social networking websites and Point of Sales (POS) service providers for convenient management of data.

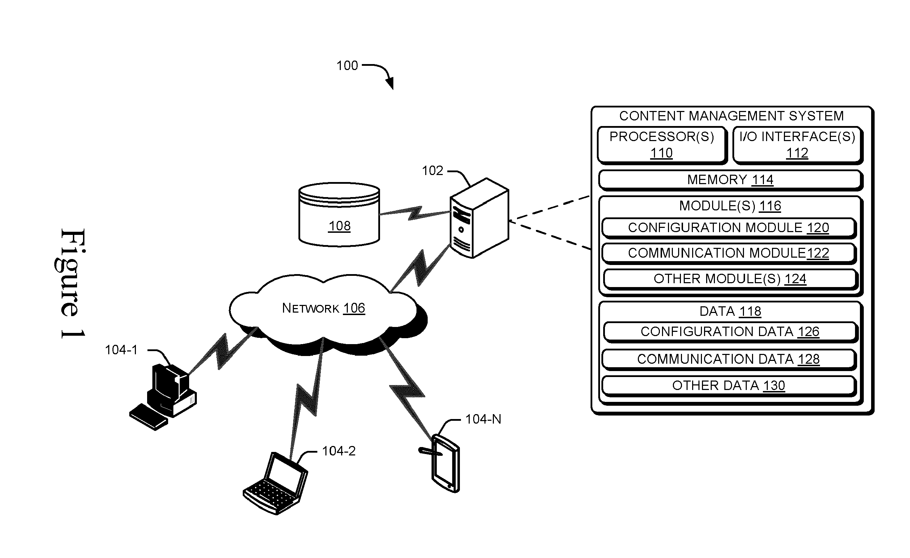

These and other advantages of the present subject matter would be described in greater detail in conjunction with the following Figures 1-2. While aspects of described system(s) and method(s) for content management system can be implemented in any number of different computing systems, environments, and/or configurations, the embodiments are described in the context of the following exemplary system(s).

Figure 1 illustrates a network environment 100 implementing a content management system 102 of a content management system, in accordance with an embodiment of the present subject matter. In one implementation, the network environment 100 can be a public network environment including thousands of personal computers, laptops, various servers, such as blade servers, and other computing devices. In another implementation, the network environment 100 can be a private network environment with a limited number of computing devices, such as personal computers, servers, laptops, and/or communication devices, such as mobile phones and smart phones.

The content management system 102 is communicatively connected to a plurality of user devices 104-1, 104-2, ..., and 104-N, collectively referred to as user devices 104 and individually referred to as a user device 104, through a network 106. The content management system 102 and the user devices 104 may be implemented in a variety of computing devices, including, servers, a desktop personal computer, a notebook or portable computer, a mainframe computer, a laptop and/or communication device, such as mobile phones and smart phones. Further, in one implementation, the content management system 102 may be a distributed or a centralized network system in which different computing devices may host one or more of the hardware or software components of the content management system 102.

The network 106 may be a wireless network, a wired network, or a combination thereof. The network 106 can also be an individual network or a collection of many such individual networks interconnected with each other and functioning as a single large network, e.g., the Internet or an intranet. The network 106 can be implemented as one of the different types of networks, such as intranet, local area network (LAN), wide area network (WAN), the internet, and such.

The network environment 100 further comprises a data repository 108 associated with the content management system 102, which stores data received from any of the user devices 104. In one implementation, the data repository 108 may be associated indirectly, through a data server (not shown in figure), with the content management system 102. In another implementation, the data repository 108 may be internal to the content management system 102. Further, the data repository 108 may be implemented as any one of a single repository, a distributed repository or a collection of distributed repositories. The data repository 108 may be capable of storing large volume of data, i.e., big data, and may be hereinafter referred to as the big data system.

According to an embodiment of the present subject matter, an organization, such as a bank, a corporation, a government organization, a social networking company, and a web-portal company may deploy a suitable content management system for management of data pertaining to the services offered by the aforementioned organizations. For instance, a web-portal company may deploy a web content management system for storing data related to users registered with the web-portal company.

In one implementation, the content management system 102, deployed by any of the organizations, may establish a connection with the data repository 108 upon receiving a data insertion request from the user device 104-1 for storing data indicated by a data reference included in the data insertion request. The content management system 102 thus facilitates in management and storing of data in a data repository, for example, a relational database management system (RDBMS), a files system, and a big data system, associated with the content management system 102.

For the purpose, the content management system 102 may include one or more processor(s) 110, I/O interface(s) 112, and a memory 114 coupled to the processor 110. The processor(s) 110 can be a single processing unit or a number of units, all of which could include multiple computing units. The processor 110 may be implemented as one or more microprocessors, microcomputers, microcontrollers, digital signal processors, central processing units, state machines, logic circuitries, and/or any devices that manipulate signals based on operational instructions. Among other capabilities, the processor 110 is configured to fetch and execute computer-readable instructions and data stored in the memory 114.

The I/O interface(s) 112 may include a variety of software and hardware interfaces, for example, interfaces for peripheral device(s), such as a keyboard, a mouse, a display unit, an external memory, and a printer. Further, the I/O interface(s) 112 may enable the content management system 102 to communicate with other devices, such as, the user device 104, web servers and external databases.

The memory 114 may include any non-transitory computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In one implementation, the content management system 102 also includes module(s) 116 and data 118.

The module(s) 116, amongst other things, include routines, programs, objects, components, data structures, etc., which perform particular tasks or implement data types. The module(s) 116 may also be implemented as, signal processor(s), state machine(s), logic circuitries, and/or any other device or component that manipulate signals based on operational instructions.

Further, the module(s) 116 can be implemented in hardware, instructions executed by a processing unit, or by a combination thereof. The processing unit can comprise a computer, a processor, such as the processor 110, a state machine, a logic array or any other suitable devices capable of processing instructions.

In another aspect of the present subject matter, the module(s) 116 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

In one implementation, the module(s) 116 further include a configuration module 120, a communication module 122, and other module(s) 124. The other modules 124 may include programs or coded instructions that supplement applications and functions of the content management system 102.

The data 118 serves, amongst other things, as a repository for storing data processed, received, and generated by one or more of the module(s) 116. The data 118 includes configuration data 126, communication data 128, and other data 130. The other data 130 includes data generated as a result of the execution of one or more modules in the module(s) 116.

As described previously, the configuration module 120 of the content management system 102 receives the data insertion request from the user device 104-1. For example, a user, such as an administrator may send the data insertion request through the user device 104-1. In an example, the user may determine a data repository in which data may be stored. For instance, the user may determine a set of rules based on which the data repository for storing the data may be selected. In one implementation, the data insertion request may include a data reference indicating data to be stored and a data repository indicator. In one example, the data reference may indicate a location of the data, for example, a path or a server address. The data repository indicator may indicate a data repository, from amongst a plurality of data repositories associated with the content management system 102, in which the data is to be stored. For example, the data repository indicator may indicate an RDBMS in which the data is to be stored. In another example, the data repository indicator may indicate the big data system in which the big data is to be stored.

Upon receiving the data insertion request, the configuration module 120 may ascertain a resource type from amongst one or more resource types included in a properties file stored in the configuration data 126. Each of the one or more resource types corresponds to a respective data repository, from the plurality of data repositories, such as the data repository 108, associated with the content management system 102. For the purpose, the configuration module 120 may initially determine the data repository indicated by the data repository indicator. The configuration module 120 may then analyze the one or more resource types stored in the configuration data 126 for ascertaining the resource type corresponding to the data repository indicated by the data repository indicator.

For example, upon receiving a data insertion request including data and a data repository indicator indicating a big data system, the configuration module 120 may analyze one or more resource types (RT), say RT1 to RT5, stored in the configuration data 126, where the RT1 corresponds to the big data system. The configuration module 120 may then ascertain the RT1 based on the data repository indicator.

In one implementation, the properties file may include server information of each of the resource types included in the properties file. The server information, as will be understood, may provide information regarding a server address of the data repository. Further, the properties file may include file constraints, such as file size and size type, which may be determined by a system administrator for constraining the data which is to be stored in the data repository 108. For example, the system administrator may ascertain the file size to be two terabytes, thereby limiting the maximum size of file which may be uploaded in the data repository 108 for storage. The properties file may be stored in the configuration data 126.

Upon ascertaining the resource type, the communication module 122 may determine a configuration element, from amongst one or more configuration element, based on the resource type. In one implementation, the communication module 122 may determine the data repository corresponding to the resource type and subsequently determine the configuration element. Each of the one or more configuration elements corresponds to a data repository from the one or more data repositories and can be used to trigger the API for the associated repository. Examples of configuration element may include, but are not limited to, the configuration element <data store> indicating the data repository big data system, the configuration element <file system> indicating the data repository file system, and the configuration element <persistence manager> indicating the data repository RDBMS.

For instance, as explained in the previous example of ascertaining the R1 corresponding to the big data system, the communication module 122 may determine <data store> from amongst the one or more configuration elements stored in the communication data 128. Each of the one or more configuration elements may be stored in the communication data 128.

In one implementation, each of the one or more configuration element may have an application programming interface (API) associated with it. The API may be understood as a protocol for establishing a connection between the content management system 102 and the data repository 108. Thus, the content management system 102 provides support for connecting with different data repositories, such as the data repositories 108. Further, the content management system 102 provides support for facilitating connection with new data systems, thereby increasing the scalability of the content management system 102.

Upon determining the configuration element, the communication module 122 may trigger the API associated with the configuration element for establishing a connection with the data repository 108. Referring to the previous example of <data store>, the communication module 122 may trigger the API associated with the <data store> for establishing the connection with the big data system.

Once the connection is established, the communication module 122 may ascertain a path indicating a location in the data repository 108 based on a predetermined application schema, for example, an XML schema or any database schema, associated with the data repository in which the data is to be stored As will be understood, the predetermined application schema helps in storing the data in the data repository 108 in an organized manner by logically determining storage locations in the data repository 108. Subsequently, the communication module 122 may provide the data to the data repository 108 for storing the data based on the path ascertained by the communication module 122.

In one implementation, the communication module 122 of the content management system 102 may receive a data retrieval request from the user device 104-1 for retrieving the data. The data retrieval request may include instructions to perform an operation for processing and retrieving the data. For instance, the data retrieval request may include instructions for performing operations, such as full text search, map-reduce process, metadata search, and the like. Upon receiving the data retrieval request, the communication module 122 may perform the operation indicated by the data retrieval request and obtain the data stored in the data repository 108 based on the path indicating the location of the data in the data repository 108. In one example, upon retrieving the data the configuration module 120 may process the data, for example, the configuration module 120 may perform full text search and metadata search based on the data retrieval request.

Thus, the content management system 102, in compliance with specified standards, provides a scalable content management system for storing data in a data repository. Additionally, the content management system 102 facilitates storage of data in a big data system, thereby integrating useful features, such as data storing, retrieval, processing, cleansing, searching, and sorting, provided by the content management system 102 with the big data system.

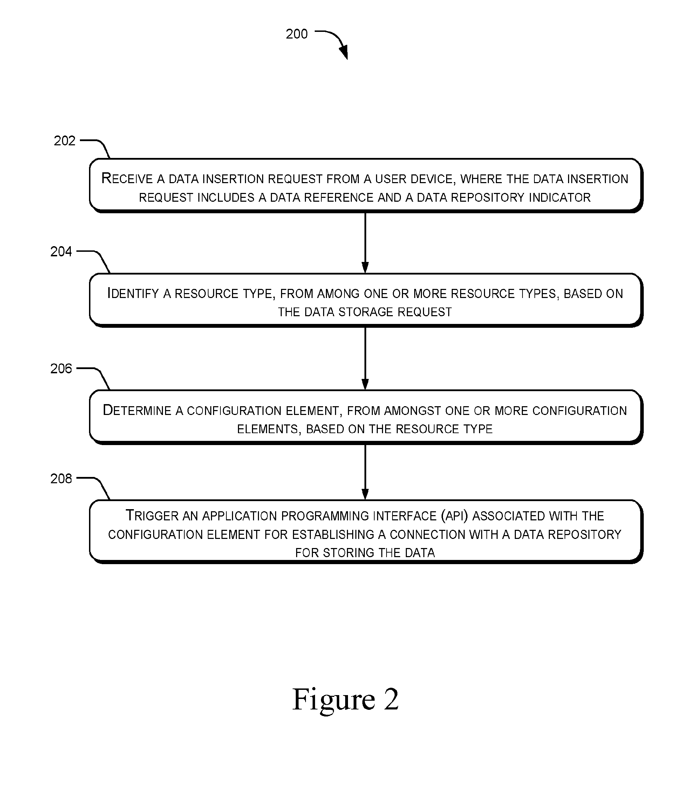

Figure 2 illustrates a method 200 for storing content in a content management system, in accordance with an embodiment of the present subject matter. The method 200 may be described in the general context message of computer executable instructions. Generally, the computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communications network. In a distributed computing environment, computer executable instructions may be located in both local and remote computer storage media, including memory storage devices.

The order in which the method 200 is described is not intended to be constructed as a limitation, and any number of the described method blocks can be combined in any order to implement the method, or an alternative method. Additionally, individual blocks may be deleted from the method without departing from the spirit and scope of the subject matter described herein. Furthermore, the method can be implemented in any suitable hardware, software, firmware, or combination thereof.

At block 202, a data insertion request is received from a user device. In one implementation, a data insertion request for storing data in a data repository, from amongst a plurality of data repositories associated with a content management system, is received. The data insertion request may include a data reference indicating data to be stored and a data repository indicator indicating a data repository in which the data is to be stored. Example of the data repository may include a file system, a RDBMS, and a big data system, i.e., a data repository capable of storing large volume of data. In one implementation, the content management system 102 may receive the data insertion request from the user device 104-1.

At block 204, a resource type, from amongst one or more resource types, is identified based on the data insertion request. In one example, each of the one or more resource types corresponds to a respective data repository from the plurality of data repositories. Upon receiving the data insertion request, the one or more resource type may be analyzed for identifying the resource type corresponding to the data repository indicated by the data repository indicator. In one implementation, the content management system 102 may analyze the one or more resource types for identifying the resource type.

At block 206, a configuration element is determined, from amongst one or more configuration element, based on the resource type. In order to determine the configuration element, the data repository corresponding to the resource type may be identified. Subsequently, each of the configuration elements may be analyzed for determining the configuration element corresponding to the identified data repository. In one implementation, the content management system 102 may determined the configuration element based on the resource type.

At block 208, an application programming interface (API) associated with the configuration element is triggered for establishing a connection with a data repository for storing the data. In one implementation, each of the configuration elements from amongst the one or more configuration element corresponds to an API. The API may be understood as a set of instructions that may be executed for establishing a connection with the data repository. Upon determination of the configuration element, the API corresponding to the configuration element may be triggered for establishing the connection with the data repository. Subsequently, the data may be stored in the data repository.

Although embodiments for systems and methods for storing data in a content management system have been described in language specific to structural features and/or methods, it is to be understood that the invention is not necessarily limited to the specific features or methods described. Rather, the specific features and methods are disclosed as exemplary implementations for storing the data in the content management system.

## Claims

1. A method for establishing a connection between a content management system (102) and a data repository (108), the method comprising:
receiving, by a configuration module (120), a data insertion request from a user device (104), wherein the data insertion request includes a data reference indicating data to be stored and a data repository indicator indicating a data repository (108), from amongst a plurality of data repositories, in which the data is to be stored, and wherein at least one data repository from the plurality of data repositories is a big data system;
identifying, by a processor, a resource type, from amongst one or more resource types, corresponding to the data repository (108) based on the data insertion request, wherein each of the one or more resource types corresponds to a respective data repository (108) from the plurality of data repositories;
determining, by the processor, a configuration element, from amongst one or more configuration elements, corresponding to the data repository (108) based on the resource type; and
triggering, by the processor, an application programming interface (API) associated with the configuration element for establishing a connection with the data repository (108) for storing the data.

2. The method as claimed in claim 1, wherein the content management system (102) is a JAVA based content management system.

3. The method as claimed in claim 1, wherein the determining further comprises identifying, by the processor, the data repository (108) corresponding to the resource type.

4. The method as claimed in claim 1, wherein the method further comprises:
ascertaining, by a communication module (122), a path indicating a location in the data repository (108) based on a predetermined application schema; and
providing, by the communication module (122), the data to the data repository (108) for storing the data in the location based on the path.

5. The method as claimed in claim 4, wherein the method further comprises:
receiving, by the communication module (122), a data retrieval request from the user device;
obtaining, by the communication module (122), the data stored in the data repository (108) based on the path; and
providing, by the communication module (122), the data to the user device (104).

6. The method as claimed in claim 1, wherein the data repository indicator, for the data being a metadata, indicates a java content repository (JCR) file system.

7. The method as claimed in claim 1, wherein the data repository indicator, for the data being a big data, indicates the big data system.

8. The method as claimed in claim 1, wherein the method further comprises performing at least one of a full text search and a metadata search on the data stored in the data repository (108).

9. A content management system (102) comprising:
a processor (110);
a configuration module (120) coupled to the processor (110) to,
receive a data insertion request from a user device (104), wherein the data insertion request includes a data reference indicating data to be stored and a data repository indicator indicating a data repository (108), from amongst a plurality of data repositories, in which the data is to be stored, and wherein at least one data repository from the plurality of data repositories is a big data system; and
identify a resource type, from amongst one or more resource types, corresponding to the data repository (108) based on the data insertion request, wherein each of the one or more resource types corresponds to a respective data
repository (108) from the plurality of data repositories; and
a communication module (122) coupled to the processor (110) to,
determine a configuration element, from amongst one or more configuration elements, corresponding to the data repository (108) based on the resource type; and
trigger a plug-in API associated with the configuration element for establishing a connection with the data repository (108) for storing the data.

10. The content management system (102) as claimed in claim 9, wherein the communication module (122) further:
ascertains a path, based on a predetermined application schema, indicating a location in the data repository (108) for storing the data; and
provides the data to the data repository (108) for storing the data in the location based on the path.

11. The content management system (102) as claimed in claim any of the preceding claims, wherein the communication module (122) further:
receives a data retrieval request from the user device (104) for retrieving the data;
obtains the data stored in the data repository (108) based on the path; and
provides the data to the user device (104).

12. The content management system (102) as claimed in claim 12, wherein the configuration module (120) further performs at least one of a full text search and a metadata search on the data stored in the data repository (108)

13. A non-transitory computer-readable medium having embodied thereon a computer program for executing a method comprising:
receiving a data insertion request from a user device (104), wherein the data insertion request includes a data reference indicating data to be stored and a data repository indicator indicating a data repository, from amongst a plurality of data repositories, in which the data is to be stored, and wherein at least one data repository from the plurality of data repositories is a big data system;
identifying a resource type, from amongst one or more resource types, corresponding to the data repository based on the data insertion request, wherein each of the one or more resource types corresponds to a respective data repository from the plurality of data repositories;
determining a configuration element, from amongst one or more configuration elements, corresponding to the data repository based on the resource type; and
triggering an application programming interface (API) associated with the configuration element for establishing a connection with the data repository for storing the data.
